# EUROPEAN PATENT APPLICATION

(11) **EP 3 167 842 A1**
(43) Date of publication of application: **17.05.2017**
(21) Application number: 16198474.5
(22) Date of filing: 11.11.2016
(51) Int. Cl.: A61C 8/00

(54) **OSTEO-INTEGRATABLE BIOMEDICAL IMPLANT**

(30) Priority: 12.11.2015 CH 16472015
(71) Applicant: Moro, Sergio, 6877 Coldrerio (CH)
(72) Inventor: Moro, Sergio, 6877 Coldrerio (CH)
(74) Representative: Zardi, Marco

(57) **Abstract**

Osteo-integratable biomedical implant, comprising an endosseous element configured to be fixed to a bone tissue, a stump configured to be coupled to said endosseous element and a clamping screw configured to clamp said stump to said endosseous element, wherein said endosseous element has an outer surface comprising a lateral part which is at least partially threaded and an apical part which is smoothed and without sharp edges.

## Description

### Field of application

The invention relates to an osteo-integratable biomedical implant, for example of the dental type.

### Prior art

In the field of implantology, there exist osteo-integrated implants comprising: an endosseous element configured to be inserted into a bone tissue, for example maxillary or mandibular; a support or "stump" configured to connect the implant to an overlying prosthetic structure; a clamping screw configured to associate the stump with the endosseous element.

The implants of the known type are provided with cutting edges so as to ensure self-tapping and insertion of the endosseous element inside the bone tissue in question.

The quality and the quantity of bone on which an implant must be installed are important factors to assess, in particular the height and the thickness of the bone, as well as the maxillary or mandibular structure. In fact, in case of a thin bone, the insertion of the implant is difficult.

If the mandibular bone (lower arch) is involved, there is the risk that the implant cutting edges may touch the lower alveolar nerve, with serious consequences for the patient.

If the maxillary bone (upper arch) is involved, there is instead the risk that the cutting edges may lacerate or perforate the membrane of the maxillary sinus, with consequent exposure of the osteo-integratable part of the implant to external agents. As a consequence, a lesion of the membrane of the maxillary sinus may entail the bone contamination and the onset of pathologies, for example peri-implantitis. Such pathologies may require replacement of the prosthesis with severe discomfort and additional costs for the patient.

### Summary of the invention

The aim of the invention is to provide an osteo-integratable implant which avoids laceration or perforation of the soft tissue the implant contacts when is inserted. In the case of an osteo-integratable dental implant, said soft tissue may be the membrane of the maxillary sinus.

The aim of the invention is achieved with an osteo-integratable biomedical implant according to claim 1.

In particular, said implant comprises: an endosseous element configured to be fixed to a bone tissue, a stump which can be coupled with said endosseous element, and a clamping screw configured to clamp said stump to said endosseous element, this implant being characterized in that said endosseous element has an outer surface comprising a lateral part which is at least partially threaded and an apical part which is smoothed and without sharp edges. The stump is configured to connect the implant to a prosthetic structure.

The term "lateral part" is understood as the part of endosseous element contacting the bone tissue. The term "apical part" is understood as the inner end of the element which contacts the membrane of the maxillary sinus or other soft tissue. Said apical part is opposite to the prosthetic structure fixed to the stump.

Preferably, said apical part has a dome-like form. In a preferred embodiment said dome follows a circumference with a suitably broad radius, otherwise is elliptical. More preferably, the outer surface of the endosseous element comprises a transition fitting between said lateral part and said apical part. Said transition fitting is advantageously circular with a suitable radius (i.e. rounded).

In some particularly advantageous embodiments, said apical part is smooth so as to allow the sliding on the soft tissue it contacts.

A first advantage of the invention is that the apical part is without cutting edges and sharp parts, so as to ensure the integrity of the soft tissue and to ensure that it is not subject to laceration or perforation during insertion of the implant.

Moreover, the implant according to the invention ensures a "sealing" effect between the soft tissue and the implant itself, with consequent reduction of the risk of contamination and infections owing to contact with external agents and therefore of bacterial proliferations. There is also reduced risk of diseases onset and of an unsuccessful outcome of the implant itself. Consequently, the invention facilitates the realization of prostheses with a "lifelong" duration.

In some embodiments, the lateral part of the outer surface of the endosseous element comprises at least one of the following portions: a first threaded portion adjacent to the apical part; a second portion wherein the thread is interrupted by shaped recesses; a third threaded portion in distal position with respect to the apical part. Said first threaded portion is preferably cylindrical or conometric; said third threaded portion is preferably conometric.

Preferably, the connection between the stump and the endosseous element is of the conometric type. The term of conometric connection is understood as meaning a connection between conical surfaces.

Advantageously, the endosseous element comprises an axial cavity having a threaded part and a frustoconical zone for receiving the stump; the stump comprises a coupling part with said endosseous element, said coupling part being also frustoconical and having substantially the same conicity as the aforementioned receiving zone provided in the endosseous element.

Said endosseous element may act as female or male component depending on the embodiment of the invention, in accordance with the accompanying claims.

In other embodiments, the coupling between the stump and the endosseous element is of the flat type.

The present invention is advantageously applicable to dental prostheses. More generally, said invention may be also applied to prostheses designed to replace or integrate a bone tissue part which has been lost or removed following injury or serious pathologies, for example tumours.

These and other characteristic features of the present invention will become clear from the following description of a preferred embodiment provided by way of a non-limiting example.

### Brief description of the figures

Fig. 1 is a longitudinally sectioned view of a dental implant with conometric connection according to an embodiment of the invention.
Fig. 2 is an enlarged detail of the implant according to Fig. 1.
Fig. 3 is a longitudinally sectioned view of a dental implant with conometric connection according to another embodiment of the invention.
Fig. 4 is a longitudinally sectioned view of an implant with flat connection according to a further embodiment of the invention.

### Detailed description of a preferred embodiment

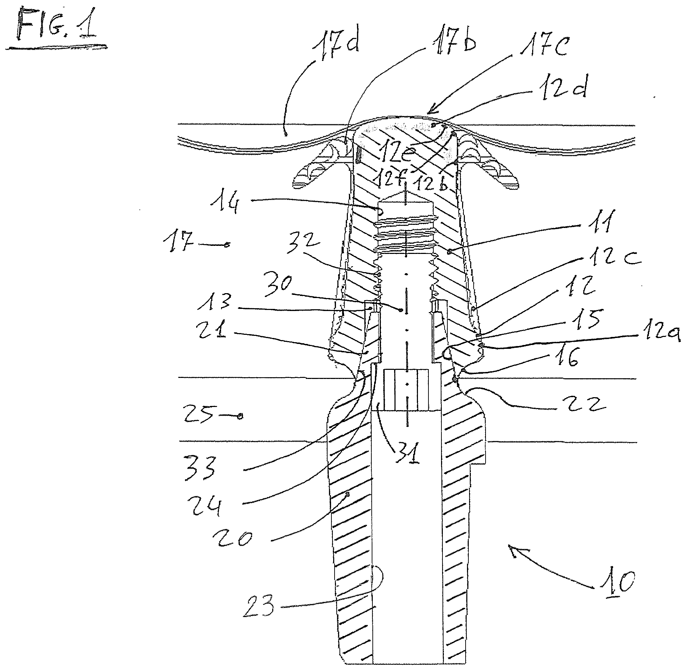

Fig. 1 shows an osteo-integratable biomedical implant 10, comprising essentially three components, i.e. an endosseous element 11, a stump 20 and a coupling screw 30. These three components are for example made of titanium.

The endosseous element 11 is provided with an axial locking seat 13 and the stump 20 is provided with an axial through-hole 23, so that the coupling screw 30 may be screwed into said locking seat 13 and inserted into the through-hole 23, thus mutually coupling the endosseous element 11 and the stump 20.

Said axial locking seat 13 comprises an internally threaded part 14 and a frustoconical part 15. Preferably, said part 15 has a conicity ranging between 1 ° and 15°, more preferably of 8°. The part 15 defines a receiving seat for the stump 20.

Said through-hole 23 of the stump 20 comprises a radial shoulder 24. Said radial shoulder 24 may be flat or conical.

The endosseous element 11 comprises an upper part 16 directed towards the stump 20, shaped with a circular form like the mouth of a flute and without sudden variations in diameter. Said part 16 is commonly termed neck or collar.

Said endosseous element 11 is also provided with an outer surface 12 comprising an at least partially threaded lateral part in contact with the bone tissue 17, 17b, and an apical part 12d in contact with the membrane of the maxillary sinus 17c.

Said lateral surface essentially comprises: a first threaded and conometric portion 12a, which is on the opposite side with respect to the apical part 12d; a second portion 12c wherein the thread is interrupted by shaped recesses; a third threaded portion 12b adjacent to the apical part 12d. Said third portion 12b may be cylindrical or conometric.

The endosseous element 11 is in contact with the maxillary bone tissue 17 through said first portion 12a and second portion 12c of the threaded lateral surface; moreover the element 11 is in contact with the bone tissue 17b, which forms an additional tissue which is autologous or of other origin, via the aforementioned third portion 12b. Said tissue 17b may be in granular, gel and/or block-like form.

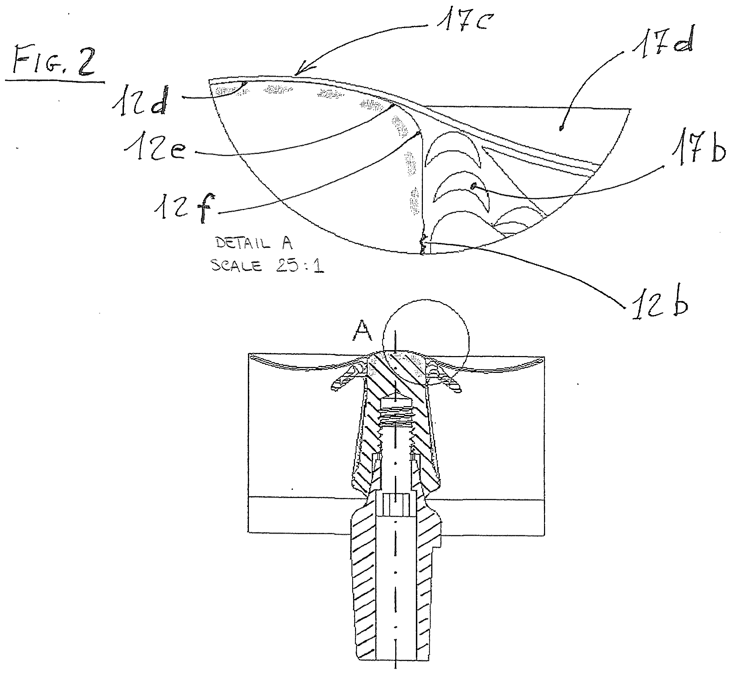

Said apical part 12d has the form of a flattened dome, without cutting edges and preferably smooth. It comprises a radial connecting zone 12f and a rounded connecting zone 12e (Fig. 2).

The apical part 12d thus shaped is such that the membrane of the maxillary sinus 17c remains intact and is not subject to lacerations or perforations during insertion of the implant 10, and such that the aerial region of the maxillary sinus or of the sinus cavity 17d is not contaminated.

The stump 20 comprises a frustoconical part 21 for coupling with the endosseous element 11. Said part 21 of the stump 20 has the same conicity as the receiving zone 15 described above. The coupling between said parts 15 and 21, consequently, forms a conometric connection (or Morse taper).

The stump 20 further comprises an outer connecting surface 22 which is continuous with the frustoconical surface of the part 21 and without sudden variations in diameter. Said connecting surface 22 is in contact with a gum part 25, associated with the bone tissue 17.

Moreover, the connecting surface 22 of the stump 20 and the outer surface of the neck 16 of the endosseous element 11 form an annular cavity 33 without edges or roughness, intended to cooperate with the crest of the bone tissue and the gum 25.

The coupling screw 30 comprises a head 30 designed to cooperate in abutting with the radial shoulder 24 of the stump 20, and a threaded shank 32 designed to engage the threaded part 14 of the endosseous element 11.

It should be noted that the described configuration of the implant 10 has a transition between the outer surfaces of the endosseous element 11 and the stump 20 which is without interruptions, thus ensuring correct blood supply of the bone tissue 17 and the gum part 25 by the blood flow.

In the embodiment shown in Fig. 1, the endosseous element 11 acts as female component and the stump 20 as male component.

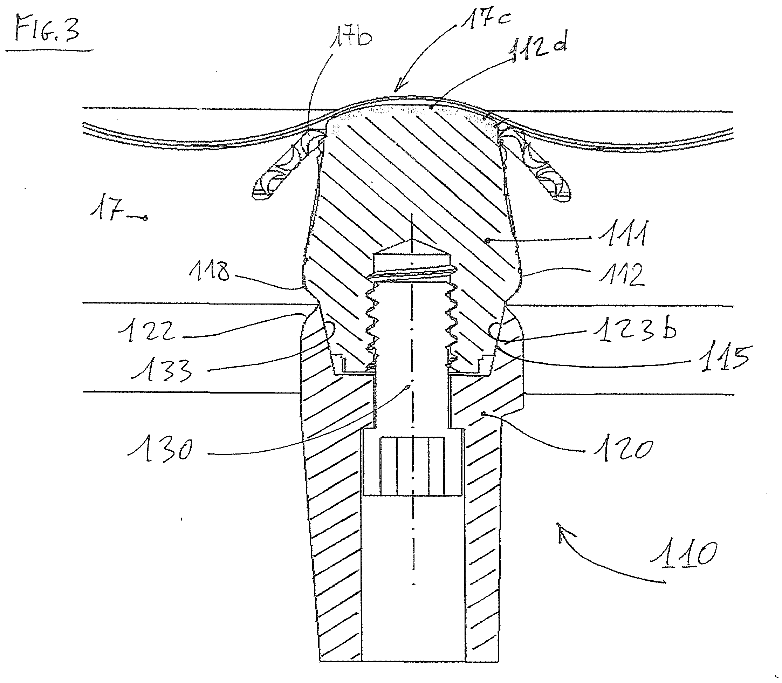

Fig. 3 shows an osteo-integratable biomedical implant 110 according to another embodiment of the invention, wherein the endosseous element 111 acts as male component and the stump 120 as female component.

In said embodiment, the endosseous element 111 is provided with an outer surface 112 also comprising a partially threaded lateral part in contact with the bone tissue 17, 17b and an apical part 112d in contact with the membrane of the maxillary sinus 17c.

The endosseous element 111 comprises a male frustoconical part 115 and a connecting surface 118 between said male part 115 and the threaded lateral part.

The stump 120 comprises a female frustoconical part 133 which is adapted to engage with said male part 115 of the endosseous element 111, and a connecting zone 122. When the stump 120 is fitted onto the endosseous element 111, said connecting zone 122 is located in the vicinity of said surface 118.

The endosseous element 111 and the stump 120 are coupled by a clamping screw 130. The conometric connecting surface between the endosseous element 111 and the stump 120 is indicated by the reference number 123b.

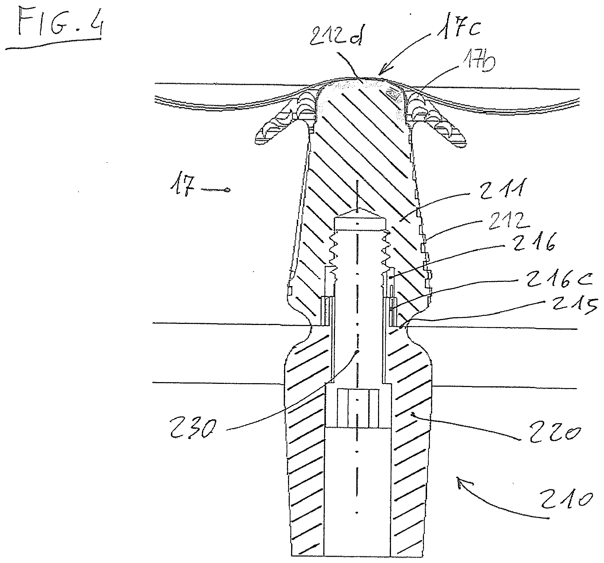

Fig. 4 shows a further embodiment of the invention which has a flat connection between endosseous element and stump.

More in particular, said Fig. 4 shows an osteo-integratable biomedical implant 210 with flat connection between the endosseous element 211 and the stump 220. The endosseous element 211 is provided with an outer surface 212 comprising a partially threaded lateral part in contact with the bone tissue 17, 17b and an apical part 212d in contact with the membrane of the maxillary sinus 17c.

In this embodiment the contact surface between the endosseous element 211 and the stump 220 is represented by a flat surface 215; the coupling is a shape coupling, for example hexagonal, which is rotationally blocked.

This coupling is formed for example by means of a male element 216c of the stump 220 and a female engaging seat 216.

When the endosseous element 211 and the stump 220 are coupled together, they are mutually clamped by the clamping screw 230.

## Claims

1. Osteo-integratable biomedical implant, comprising an endosseous element (11, 111, 211) configured to be fixed to a bone tissue (17, 117, 217), a stump (20, 120, 220) configured to be coupled with said endosseous element (11, 111, 211) and a clamping screw (30, 130, 230) configured to clamp said stump (20, 120, 220) to said endosseous element (11, 111, 211), **characterized in that**
said endosseous element (11, 111, 211) has an outer surface (12, 112, 212) comprising an at least partially threaded lateral part and a smoothed apical part (12d, 112d, 212d) without sharp edges.

2. Implant according to claim 1, said apical part (12d, 112d, 212d) having a dome-like form.

3. Implant according to claim 1 or 2, said apical part (12d, 112d, 212d) being smooth.

4. Implant according to any one of the preceding claims, wherein said endosseous element (11, 111, 211) comprises a transition fitting between said lateral part and said apical part.

5. Implant according to claim 4, wherein said fitting is circular with suitable radius.

6. Implant according to any one of the preceding claims, wherein said at least partially threaded lateral surface comprises at least one of the following: a first threaded portion (12b) adjacent to the apical part; a second portion (12c) wherein the thread is interrupted by shaped recesses; a third threaded portion (12a) in distal position with respect to the apical part.

7. Implant according to claim 6, wherein said first threaded portion (12b) is cylindrical or conometric.

8. Implant according to claim 6 or 7, wherein said third threaded portion (12a) is conometric.

9. Implant according to any one of the preceding claims, wherein said endosseous element (11, 111) and said stump (20, 120) are coupled through a conometric connection.

10. Implant according to claim 9, wherein said endosseous element (11, 111) comprises an axial cavity (13) having a threaded part (14) and a frustoconical zone (15, 115) for receiving the stump.

11. Implant according to claim 10, wherein said stump (20, 120) comprises a frustoconical part (21, 133) for coupling with said endosseous element (11, 111), having substantially the same conicity as said zone (15, 115) receiving the stump.

12. Implant according to any one of the preceding claims, wherein the stump (20) comprises a connecting surface (22) which is continuous with said frustoconical part (21), and the endosseous element (11) comprises a part (16) directed towards the stump and shaped with a circular form like the mouth of a flute, said connecting surface (22) of the stump and said part (16) of the endosseous element forming an annular cavity (33) without edges and said endosseous element (11) acting as female component and said stump (20) as male component.

13. Implant according to any one of claims 1-11, wherein the endosseous element (111) comprises a connecting surface (118) between said frustoconical zone (15) receiving the stump and the lateral part of said outer surface (112), and the stump (120) comprises a connecting surface (122) which is located in the vicinity of the connecting surface (118) of the endosseous element when the stump is fitted onto said endosseous element, said endosseous element (111) acting as male component and said stump (120) as female component.

14. Implant according to any one of the preceding claims 1-8, wherein said endosseous element (211) and said stump (220) are coupled through a flat connection.

15. Implant according to claim 14, wherein said endosseous element (211) and said stump (220) are coupled through a rotationally blocked shape coupling.
